# EUROPÄISCHE PATENTANMELDUNG

(11) **EP 3 715 777 A1**
(43) Veröffentlichungstag der Anmeldung: **30.09.2020**
(21) Anmeldenummer: 20163608.1
(22) Anmeldetag: 17.03.2020
(51) Int. Cl.: G01B 5/00, B25B 11/00, G01B 21/04, B25H 1/00

(54) **SYSTEM ZUR HALTERUNG ZU VERMESSENDER WERKSTÜCKE**

(30) Priorität: 25.03.2019 DE 102019107498
(71) Anmelder: Carl Zeiss Fixture Systems GmbH, 66636 Tholey (DE)
(72) Erfinder: Kirsch, Stephan, 66292 Riegelsberg (DE); Stegemann, Andreas, 66572 Eppelborn (DE)
(74) Vertreter: Patentanwälte Bernhardt / Wolff Partnerschaft mbB

(57) **Zusammenfassung**

Die Erfindung betrifft ein System zur Halterung zu vermessender Werkstücke, insbesondere Karosseriebauteile, in einer Referenzposition, mit Halterungselementen (1), die jeweils einen Kontaktteil (2) zur Anlage gegen das Werkstück und einen an einer Trägerbasis montierbaren Basisteil (3) aufweisen, wobei der Kontaktteil (2) auf dem Basisteil (3) in verschiedenen Positionen arretierbar ist, sowie mit Einrichtungen zur Verschiebung der Position des Kontaktteils (2) auf dem Basisteil (3) um vorbestimmte Weglängen. Erfindungsgemäß sind die Verstelleinrichtungen als separate, von den Halterungselementen (1) getrennte Einrichtungen ausgebildet.

## Beschreibung

Die Erfindung betrifft ein System zur Halterung zu vermessender Werkstücke, insbesondere Karosseriebauteile, in einer Referenzposition, mit Halterungselementen, die jeweils einen Kontaktteil zur Anlage gegen das Werkstück und einen an einer Trägerbasis montierbaren Basisteil aufweisen, wobei der Kontaktteil auf dem Basisteil in unterschiedlichen Positionen arretierbar ist, sowie mit Einrichtungen zur Verstellung der Position des Kontaktteils auf dem Basisteil um vorbestimmte Weglängen.

Die Erfindung betrifft ferner eine in dem System verwendbare Verstellvorrichtung.

Ein Halterungssystem solcher Art ist aus der EP 1 155 782 B3 bekannt. Die Halterungselemente dieses bekannten Haltemesssystems weisen Verstelleinrichtungen zur Positionierung des Kontaktteils auf dem Basisteil auf, die ein Sortiment von Distanzstücken umfassen, das es gestattet, den Kontaktteil auf dem Basisteil in zwei zueinander senkrechten Richtungen um vorbestimmte Weglängen zu verstellen.

Durch die Erfindung wird ein neues System der eingangs genannten Art geschaffen, das verringerten Aufwand für die Verstellung der Halterungselemente erfordert.

Das diese Aufgabe lösende System nach der Erfindung ist dadurch gekennzeichnet, dass die Verstelleinrichtungen als separate, von den Halterungselementen getrennte Einrichtungen ausgebildet sind.

Indem erforderliche Verstellungen der Kontaktteile der Halterungselemente erfindungsgemäß mit Hilfe einer ggf. einzigen Verstelleinrichtung erfolgen, verringert sich erheblich der Bauaufwand für die Halterungselemente, die selbst keine Verstelleinrichtungen aufzuweisen brauchen.

In einer bevorzugten Ausführungsform der Erfindung umfassen die Verstelleinrichtungen Verstellantriebe, insbesondere Spindelantriebe, zur Verstellung des Kontaktteils auf einer ebenen Oberfläche des Basisteils in zwei zueinander senkrechten Richtungen.

Besonders bevorzugt weisen die Verstellantriebe gegen den Kontaktteil anlegbare Schieberplatten auf, wobei die Schieberplatten vorzugsweise gegen einen plattenförmigen, eine Aufweitung bildenden Fußabschnitt des Kontaktteils anliegen.

Der Kontaktteil kann zur Arretierung auf dem Basisteil mit der ebenen Oberfläche des Basisteils verklemmbar sein. Diese Verklemmung kann so erfolgen, dass mittels den Kontaktteil hintergreifenden Schrauben der Kontaktteil gegen die ebene Oberfläche des Basisteils gezogen wird.

In weiterer Ausgestaltung der Erfindung umfassen die Verstelleinrichtungen Verschiebungen des Kontaktteils auf der ebenen Oberfläche erfassende Längenmesseinrichtungen, insbesondere Messuhren umfassende Längenmesseinrichtungen.

Vorzugsweise weisen die Längenmesseinrichtungen jeweils eine gegen den Kontaktteil gegenüber der Schieberplatte anlegbare Tasterplatte auf.

In einer weiteren bevorzugten Ausführungsform der Erfindung umfassen die Verstelleinrichtungen eine das Halterungselement in einer Bearbeitungsposition aufnehmende Platte.

Zweckmäßig sind auf zwei zueinander im rechten Winkel stehenden Teilen eine Trägerplatte jeweils ein geführter Schlitten mit der Messeinrichtung und eine Bewegungseinrichtung angeordnet.

Die Schieberplatten und Tasterplatten können jeweils durch ein Paar von Schraubendruckfedern beaufschlagbar sein. Unter Einschluss zwischen den Schieberplatten können Verstellwege des Kontaktteils durch die Messeinrichtungen exakt erfasst werden.

Die Erfindung ist nachfolgend anhand eines Ausführungsbeispiels und der beiliegenden, sich auf dieses Ausführungsbeispiel beziehenden Zeichnungen weiter erläutert. Es zeigen:
- Fig. 1 bis 4: eine Einrichtung nach der Erfindung zur Verstellung eines erfindungsgemäßen Halterungselements in verschiedenen Ansichten,
- Fig. 5: einen Teil der Verstelleinrichtung von Fig. 1 bis 4,
- Fig. 6: die Verstelleinrichtung von Fig. 1 bis 4 ohne eine Halterungselement, und
- Fig. 7: ein in dem erfindungsgemäßen System verwendbares Halterungselement.

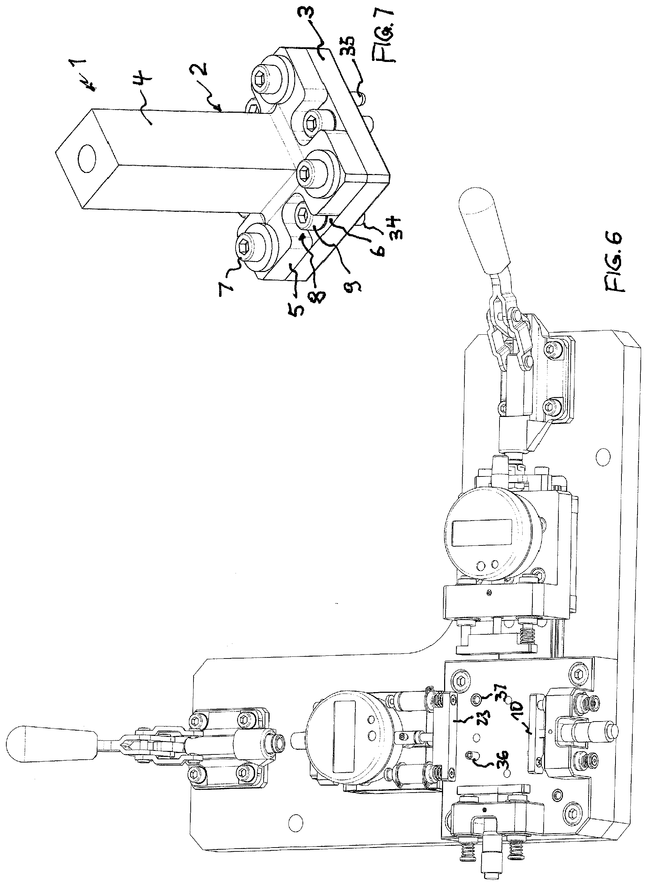

Ein von einem erfindungsgemäßen Halterungssystem umfasstes, in Fig. 7 isoliert dargestelltes Halteelement 1 weist einen Kontaktteil 2 und einen Basisteil 3 auf. Wie in EP 1 155 782 B3 beschrieben ist, kann ein Säulenabschnitt 4 des Kontaktteils 2 mit einem (nicht gezeigten) Kontaktkopf bestückt werden, gegen den ein Werkstück, insbesondere ein Karosseriebauteil, zur Anlage kommt. Der Basisteil 3 des Halterungselements 1 ist an einem Basisträger des Halterungssystems montierbar.

Der Säulenabschnitt 4 des Kontaktteils 2 geht in einen plattenförmigen Fußabschnitt 5 über, der mit seiner dem Säulenabschnitt 4 abgewandten Plattenfläche auf einer dem Kontaktteil 2 zugewandten Plattenfläche 6 des Basisteils 3 aufsitzt.

Der plattenförmige Fußabschnitt 4 ist mit dem Basisteil 3 durch vier, jeweils an den Plattenecken angeordnete Schrauben 7 verbunden. Durchgangslöcher für die Schrauben 7 im Fußabschnitt 5 weisen einen Innendurchmesser auf, der größer als der Schaftdurchmesser aber kleiner als der Kopfdurchmesser der Schrauben 7 ist.

Jeweils zwischen den Schrauben 7 weist der Fußabschnitt 4 an seinen vier Seiten eine Randausnehmung 8 auf, in die hinein jeweils ein Schraubenkopf 9 einer den Basisteil 3 mit dem Basisträger verbindenden Schraube 34 ragt. Breite und Tiefe der Randausnehmungen 8 sind größer als der Durchmesser des Schraubenkopfs 9.

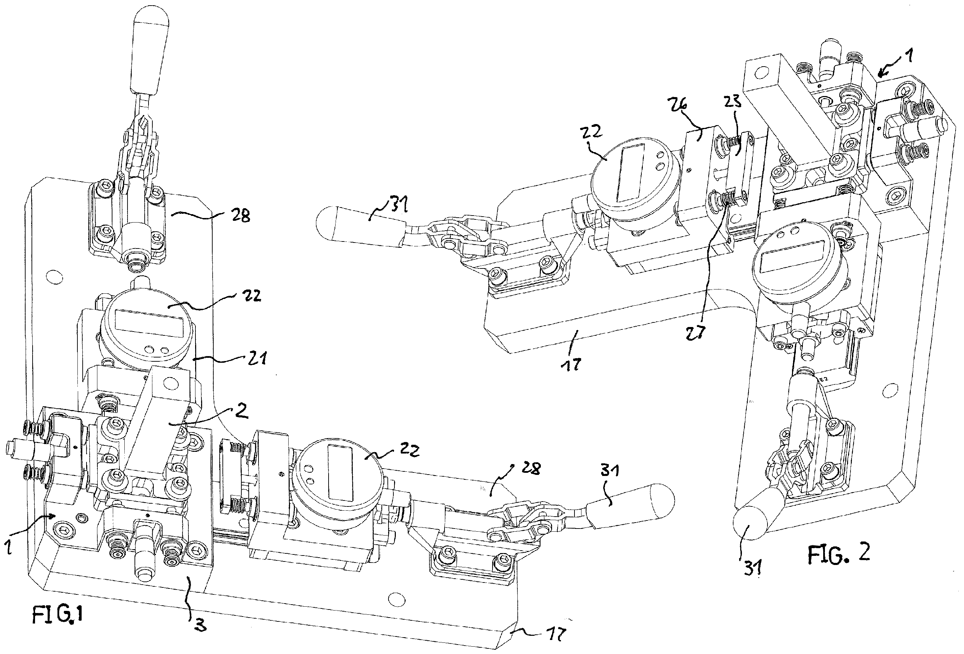

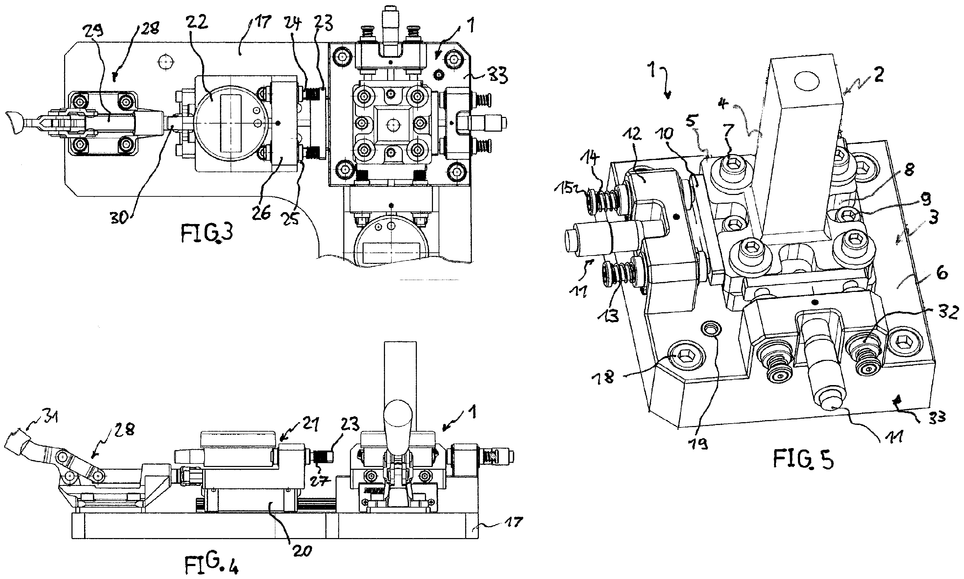

Im eingebauten Zustand des Halterungselements 1 liegt an zwei zueinander senkrechten Seiten des Fußabschnitts 5 des Kontaktteils 2 jeweils eine längliche Schieberplatte 10 an, die durch einen an der Schieberplatte mittig angreifenden Spindelantrieb 11 senkrecht zur Plattenebene hin und her bewegbar ist. Die Spindel des Spindelantriebs 11 greift in ein (nicht gezeigtes) Gewinde ein, das in einem am Rand eines in Fig. 5 gesondert dargestellten Plattenteils 33 der Verstelleinrichtung gemäß Fig. 1 bis 4 einstückig von dem Plattenteil 33 vorstehenden Trägerelement 12 gebildet ist.

Das Trägerelement 12 weist ferner zwei jeweils einen Führungsstift 13 aufnehmende Führungsbuchsen 32 in Durchgangsbohrungen auf, wobei die Führungsstifte 13 an einem Ende mit der Druckplatte 10 verbunden sind. Jeweils am anderen Ende der Führungsstifte 13 sitzen auf den Führungsstiften 13 Schraubenfedern 14 und liegen mit einem Ende gegen das Trägerelement 12 bzw. der Führungsbuchse 32 und dem anderen Ende gegen an den Führungsstiften 13 angebrachte Endplatten 15 an.

Der Kontaktteil 2 des in Fig. 7 gesondert dargestellten Halterungselements 1 ist durch die vier Schrauben 7, welche den Kontaktteil 2 gegen die Plattenfläche 6 des Basisteils 3 pressen, auf der Plattenfläche 6 arretiert. Bei Lockerung der Schrauben 7 lässt sich der Kontaktteil 2 auf der Plattenfläche 6 verschieben, indem die Schrauben 7 in den Durchgangsbohrungen im Fußabschnitt 5 und die Schraubenköpfe 9 innerhalb der Randausnehmungen 8 ein Spiel haben.

Mit Hilfe der in den Figuren 1 bis 4 gezeigten Vorrichtung kann im Rahmen dieses Spiels eine gewünschte Position des Kontaktteils 2 auf der Plattenfläche 6 des Basisteils 3 des Halterungselements 1 eingestellt und der Kontaktteil 2 auf der Plattenfläche 6 danach wieder arretiert werden.

Die gezeigte Einstellvorrichtung umfasst eine gewinkelte Trägerplatte 17, mit der in einem Eckenbereich der Plattenteil 33 durch vier Schrauben 18 verbindbar und durch Passstifte 19 genau positionierbar ist. In der auf der Trägerplatte 17 montierten Position des Plattenteils 33 weisen die an den Randseiten des Plattenteils 33 vorstehenden Trägerelemente 12 nach außen.

Jeder der beiden Winkelschenkel der Trägerplatte 17 weist eine Schlittenführung 20 für einen Messschlitten 21 auf. Die Messschlitten 21 sind jeweils mit einer Messuhr 22 bestückt.

Die Messschlitten 21 umfassen ferner eine längliche Tasterplatte 23, die den Messstift der betreffenden Messuhr 22 betätigt.

Die in ihren Abmessungen mit den Schieberplatten 10 vergleichbaren Tasterplatten 23 sind jeweils durch zwei Führungsstifte 24 parallel zum Taststift der Messuhr 22 in Führungsbuchsen 25 geführt, wobei die Führungsbuchsen 25 in Durchgangsöffnungen in einem Halterungsblock 26 eingesetzt sind. Auf den Führungsstiften 24 sitzt jeweils eine Schraubenfeder 27, die mit einem Ende gegen die Tasterplatte 23 und dem anderen Ende gegen die betreffende Führungsbuchse 25 anliegt.

Auf den Schenkeln der gewinkelten Trägerplatte 17 ist ferner jeweils eine Einrichtung 28 zur Bewegung des Messschlittens 21 angebracht. Die Bewegungseinrichtung 28 umfasst einen an dem Messschlitten angreifenden Schubbolzen 30, der in einer zu der Schlittenführung 21 ausgerichteten Führung 29 durch einen Hebel 31 bewegbar ist.

Die vorangehend beschriebene Vorrichtung kann z.B. vorteilhaft benutzt werden, um im Falle eines Werkstückwechsels die Halterungselemente 1 des Halterungssystems an die neuen Bedingungen anzupassen und die Position der Kontaktteile auf den Plattenflächen der Basisteile neu einzustellen.

Durch eine Messmaschine ist vorher zu ermitteln, um welche Beträge die Kontaktteile 2 auf der Plattenfläche 6 des Basisteils 3 jeweils in den beiden zueinander senkrechten Richtungen zu verschieben sind.

Zur Neueinstellung werden die betreffenden Halterungselemente 1 demontiert und auf dem Plattenteil 33 mit Hilfe der Schrauben 37 und mit Hilfe von Patstiften 35 und 36 befestigt.

Während die Schieberplatten 10 durch die Schraubenfedern 14 in ständiger Anlage gegen den Fußabschnitt 5 des Kontaktteils 2 gehalten werden, befinden sich die Tasterplatten 23 zunächst noch im Abstand von dem Fußabschnitt 5. Durch Betätigung der jeweiligen Hebel 31 werden dann auch die Tasterplatten 23 in Anlage gegen den Fußabschnitt 5 des Kontaktteils 2 gebracht. Dabei wird die Tasterplatte 23 gegen die Druckkraft der Schraubenfedern 27 in Richtung des Kontaktstifts der Messuhren 22 verschoben. Der angezeigte Messuhrwert kann als Ausgangswert für weitere Messungen auf null eingestellt werden.

Zur Neueinstellung der Position des Kontaktteils 2 werden die den Basisabschnitt 5 auf der Plattenfläche 6 arretierenden Schrauben 7 gelockert, so dass der Fußabschnitt 5 auf der Plattenfläche 6 im Rahmen des Spiels des Fußabschnitts 5 auf der Plattenfläche 6 verschiebbar ist.

Die vorab durch eine Messmaschine als erforderlich ermittelte Änderung der Position des Fußabschnitts 5 auf der Plattenfläche 6 kann nun mit Hilfe der Spindelantriebe 11 eingestellt werden. Durch die Schraubenfedern 14,27 verbleiben die Schieberplatten 10 bzw. die Tasterplatten 23 stets in Anlage gegen den Fußabschnitt 5.

Nach Einstellung der Positionen werden die Schrauben 7 wieder festgezogen und damit der Fußabschnitt 5 auf der Plattenfläche 6 arretiert.

Das neu eingestellte Halterungselement 1 wird dann durch Lösen der Schrauben 34 von dem Plattenteil 33 demontiert und in seiner Montageposition an der Trägerbasis des Halterungssystems montiert.

Es versteht sich, dass der Plattenteil 33 einstückig mit der gewinkelten Trägerplatte 17 ausgebildet sein könnte.

## Patentansprüche

1. System zur Halterung zu vermessender Werkstücke, insbesondere Karosseriebauteile, in einer Referenzposition, mit Halterungselementen (1), die jeweils einen Kontaktteil (2) zur Anlage gegen das Werkstück und einen an einer Trägerbasis montierbaren Basisteil (3) aufweisen, wobei der Kontaktteil (2) auf dem Basisteil (3) in verschiedenen Positionen arretierbar ist, sowie mit Einrichtungen zur Verstellung der Position des Kontaktteils (2) auf dem Basisteil (3) um vorbestimmte Weglängen,
**dadurch gekennzeichnet,**
**dass** die Verstelleinrichtungen als separate, von den Halterungselementen (1) getrennte Einrichtungen ausgebildet sind.

2. System nach Anspruch 1,
**dadurch gekennzeichnet,**
**dass** die Verstelleinrichtungen Verstellantriebe, insbesondere Spindelantriebe (10-12), zur Verschiebung des Kontaktteils (2) auf einer ebenen Oberfläche (6) des Basisteils (3) in zwei zueinander senkrechten Richtungen umfassen.

3. System nach Anspruch 1 oder 2,
**dadurch gekennzeichnet,**
**dass** die Verstellantriebe (10-12) gegen den Kontaktteil (2) anlegbare Schieberplatten (10) aufweisen, wobei die Schieberplatten (10) vorzugsweise gegen einen plattenförmigen, eine Aufweitung bildenden Fußabschnitt (5) des Kontaktteils (2) anliegen.

4. System nach einem der Ansprüche 1 bis 3,
**dadurch gekennzeichnet,**
**dass** die Verstellantriebe (10-12) jeweils an dem Halterungselement (1) gebildet sind.

5. System nach einem der Ansprüche 1 bis 4,
**dadurch gekennzeichnet,**
**dass** der Kontaktteil (2) zur Arretierung auf dem Basisteil (3) mit der ebenen Oberfläche (6) des Basisteils (3) verklemmbar ist.

6. System nach einem der Ansprüche 1 bis 5,
**dadurch gekennzeichnet,**
**dass** die Verstelleinrichtungen eine Verschiebung des Kontaktteils (2) auf der ebenen Oberfläche (6) des Basisteils (3) erfassende Längenmesseinrichtungen, insbesondere Messuhren (22) verwendete Längenmesseinrichtungen, umfassen.

7. System nach Anspruch 6,
**dadurch gekennzeichnet,**
**dass** die Längenmesseinrichtungen jeweils eine an den Kontaktteil (2) gegenüber der Schieberplatte (10) anlegbare Tasterplatte (23) umfassen.

8. System nach einem der Ansprüche 1 bis 7,
**dadurch gekennzeichnet,**
**dass** die Verstelleinrichtungen eine das Halterungselement (1) in einer Bearbeitungsposition aufnehmende Platte (33) umfassen.

9. System nach Anspruch 8,
**dadurch gekennzeichnet,**
**dass** auf zwei zueinander im rechten Winkel stehenden Teilen einer Trägerplatte (17) ein jeweils entlang einer Führung (20) bewegbarer Messschlitten (21) mit der Längenmesseinrichtung und eine Bewegungseinrichtung (28) angeordnet sind.

10. System nach einem der Ansprüche 7 bis 9,
**dadurch gekennzeichnet,**
**dass** die Schieberplatten (10) und Tasterplatten (23) jeweils durch ein Paar von Schraubendruckfedern beaufschlagbar sind.

11. Vorrichtung zur Verstellung von Halterungselementen (1) eines Systems zur Halterung zu vermessender Werkstücke, insbesondere Karosseriebauteile, in einer Referenzposition, wobei die Halterungselemente (1) jeweils einen Kontaktteil (2) zur Anlage gegen das Werkstück und einen an einer Trägerbasis montierbaren Basisteil (3) aufweisen, wobei der Kontaktteil (2) auf dem Basisteil (3) in verschiedenen Positionen arretierbar und durch die Verstellvorrichtung auf dem Basisteil (3) um vorbestimmte Weglängen verstellbar ist, **dadurch gekennzeichnet,**
**dass** die Verstellvorrichtung als separate, von den Halterungselementen (1) getrennte Einrichtung ausgebildet ist.
